# EUROPEAN PATENT APPLICATION

(11) **EP 2 491 836 A1**
(43) Date of publication of application: **29.08.2012**
(21) Application number: 10857150.6
(22) Date of filing: 08.10.2010
(51) Int. Cl.: A47J 27/08, A47J 27/092, A47J 36/00

(54) **ELECTRIC PRESSURE COOKER WITH QUICK PRESSURE RELIEF FUNCTION**

(30) Priority: 14.09.2010 CN 201010280561
(71) Applicant: Guangdong Luby Electronic Co., Ltd., Dongguan, Guangdong 523808 (CN)
(72) Inventor: GONG, Shengpeng, Dongguan Guangdong 523808 (CN); LI, Zhonglin, Dongguan Guangdong 523808 (CN)
(74) Representative: Manitz, Finsterwald & Partner GbR
(86) International application number: PCT/CN2010/077578
(87) International publication number: WO 2012/034294

(57) **Abstract**

An electric pressure cooker with a quick pressure relief function comprises a cooker cover which comprises a plastic-surface cover (10) and a stainless steel cover (11) and a cooker body which comprises an upper gasket base (12) and a plastic outer housing (13); the electric pressure cooker further comprises a water pump (14) which is provided inside the cooker body and a water tank which is provided at a side surface of the cooker body; the cooker cover is provided with a water spray structure for split-flowing water onto an upper surface of the stainless steel cover (11); the upper gasket base (12) is provided with a water collect structure for receiving water flowing down from the upper surface of the stainless steel cover (11); the water collect structure is provided with a water discharge hole (15) at a bottom surface thereof; the water tank is provided with an opening at an upper end thereof; the opening of the water tank is located under the water discharge hole (15); a water inlet of the water pump (14) is communicated with a water outlet of the water tank, and a water outlet of the water pump (14) is communicated with the water spray structure. With cooperation among the water pump (14), the water tank, the water spray structure, and the water collect structure, the electric pressure cooker realizes to cool down with water circulation.

## Description

### Field of the Invention

The present application relates to technical field of pressure cooker, and more specifically, to an electric pressure cooker with a quick pressure relief function. The Present Application claims priority to a Chinese Patent Application No. 201010280561.3 filed on 14 September 2010, the content of which is incorporated by reference in its entirety herein.

### Background of the Invention

Electric pressure cooker is widely popular because it is capable of fast cooking and losing a few nutrition of food. And the electric pressure cooker is one of electrical appliances which grow rapidly in home appliance industry, because of saving time, saving electricity, being convenient and being fast. However, since a user can not rapidly open a cooker cover after food has been rapidly cooked by the electric pressure cooker, the user can not enjoy delicious food immediately, thereby it has become most trouble for the user using the electric pressure cooker.

When cooking by the electric pressure cooker is completed, since the electric pressure cooker has a high pressure therein, it is necessary for the user to wait for a cooker body to cool down and then open the cooker cover. There are two cooling methods commonly used, i.e. a method by opening a pressure relief valve to exhaust vapor, reduce pressure, and perform cooling, and a natural cooling method. The method by opening the pressure relief valve to exhaust vapor, reduce pressure, and perform cooling has the following problems: if food in the electric pressure cooker is liquid food, the fluid food will be discharged from a vapor outlet along with a high-pressure vapor flow, so that it is possible to scald the user, and the liquid food will fall on the cooker cover and thus it is easy to breed bacteria, bring health problem and it is difficult for the user to clean the cooker cover. The natural cooling method has the following problems: it may take a relative long time to wait for cooling down, generally more than 30 minutes, if applied in the highlands, even longer, and it is inconvenient for the user.

Conventional electric pressure cooker employing water-cooled principle to lower a temperature and reduce the pressure of the electric pressure cooker comprises a cooker cover and a cooker body, the cooker cover is provided with a water intake hole and an upper gasket base is provided with a water discharge hole. When it is required to lower the temperature and relieve the pressure, it is required that the electric pressure cooker is moved close to a place with a water pipe, and then water is poured into via the water intake hole through a water pipe, and water is discharged from the upper gasket base after flowing through the cooker cover, thereby cooling down the electric pressure cooker to achieve a pressure relief function. In the prior art, there are following problems: operation is inconvenient, water resources may be wasted, and safety is poor.

### Summary of the Invention

The present application is to provide an electric pressure cooker with a quick pressure relief function, which has advantages of operating convenience, saving water resources and good safety.

An electric pressure cooker with a quick pressure relief function comprises a cooker cover and a cooker body, the cooker cover comprises a plastic-surface cover and a stainless steel cover, the cooker body comprises an upper gasket base and a plastic outer housing; the electric pressure cooker further comprises a water pump which is provided inside the cooker body and a water tank which is provided at a side surface of the cooker body; the cooker cover is provided with a water spray structure for split-flowing water onto an upper surface of the stainless steel cover; the upper gasket base is provided with a water collect structure for receiving water flowing down from the upper surface of the stainless steel cover, and the water collect structure is provided with a water discharge hole at a bottom surface thereof; the water tank is provided with an opening at an upper end thereof, and the opening of the water tank is located under the water discharge hole; a water inlet of the water pump is communicated with a water outlet of the water tank, and a water outlet of the water pump is communicated with the water spray structure.

In the electric pressure cooker with the quick pressure relief function, the water spray structure comprises a water storing cavity and a water spray device arranged at a periphery of the water storing cavity; the water spray device surrounds the water storing cavity; the water storing cavity is surrounded and formed by a middle portion of a lower surface of the plastic-surface cover and a middle portion of the upper surface of the stainless steel cover; the water spray device has evenly distributed gaps, and the gaps of the water spray device are communicated with the water storing cavity; a seepage gap is formed between an inside lower portion of the plastic-surface cover and an outside lower portion of the stainless steel cover; the water collect structure comprises a water collect trough and a ring-like water discharge trough communicated with the water collect trough; the seepage gap is located above the water collect structure; the water discharge hole is provided at a bottom surface of the water collect trough.

In the electric pressure cooker with the quick pressure relief function, the water spray structure comprises a water storing cavity and a water spray device arranged at a periphery of the water storing cavity; the water spray device surrounds the water storing cavity; the water storing cavity is surrounded and formed by a middle portion of a lower surface of the plastic-surface cover and a middle portion of the upper surface of the stainless steel cover; the water spray device has evenly distributed gaps, and the gaps of the water spray device are communicated with the water storing cavity; the water spray device is provided with a water collect ring which surrounds the water spray device at a periphery thereof, a bottom surface of the water collect ring is in tight contact with the upper surface of the stainless steel cover, the water collect ring is provided with an aperture located above the water collect structure.

In the electric pressure cooker with the quick pressure relief function, the cooker cover is engaged with the cooker body by means of rotating; the water outlet of the water pump is communicated with the water spray structure via an adapting device which comprises an adapting hole, a water pipe joint C, an adapter and a water pipe joint B; both the adapting hole and the water pipe joint C are provided to the cooker cover, and the adapting hole is communicated with the water pipe joint C; both the adapter and the water pipe joint B are provided to the cooker body, and the adapter is communicated with the water pipe joint B; the water outlet of the water pump is communicated with the water pipe joint B, the water pipe joint C is communicated with the water storing cavity via a water hose; when the cooker cover is rotatedly engaged with the cooker body, the adapter is inserted into the adapting hole.

In the electric pressure cooker with the quick pressure relief function, the cooker body is provided with a recessed groove at the side surface thereof; the recessed groove is provided with clamping-positioning grooves; the water tank comprises a water tank casing and a water tank cover; the water tank casing is provided with clamping jaws which are mated with and connected to the clamping-positioning grooves and is provided with an open port at an upper end thereof; the water tank cover is provided on the open port of the water tank casing, a bottom surface of the water tank cover has a downward concave arc structure and is provided with an orifice which is provided with a filter screen, the water tank cover is located under the water discharge hole; the water tank casing is provided with a water outlet at a lower end thereof; the water outlet of the water tank casing is provided with a water discharge valve.

In the electric pressure cooker with the quick pressure relief function, the water discharge valve comprises a valve core, a sealing ring sheathed on an upper portion of the valve core, and a conical spring sheathed on a lower portion of the valve core; the valve core is used to block the water outlet of the water tank casing; the recessed groove of the cooker body is provided with a water intake hole at a bottom surface thereof; a pushing post is provided to the water intake hole and corresponds to the water outlet of the water tank casing, and the water intake hole is communicated with the water inlet of the water pump via a water pipe joint A; when the valve core is pushed up by the pushing post, the water discharge valve is opened; the water outlet of the water tank casing is provided with an O-shaped sealing ring A, the adapter is provided with an O-shaped sealing ring B.

In the electric pressure cooker with the quick pressure relief function, both the adapter and the water pipe joint B are provided to the upper gasket base; the upper gasket base is provided with a side step for aligning with a handle of the cooker cover.

In the electric pressure cooker with the quick pressure relief function, the electric pressure cooker further comprises a control panel provided at a front surface of the cooker body; the control panel is provided with a control circuit therein; the control circuit is electrically connected to the water pump.

In the electric pressure cooker with the quick pressure relief function, the cooker cover is hinged to the cooker body; the water outlet of the water pump is communicated with the water spray structure via a flexible water tube.

In the electric pressure cooker with the quick pressure relief function, the side surface of the cooker body is fixedly provided with the water tank; the water tank is provided with the opening at the upper end thereof, a water tank cover is provided on the opening of the water tank; a bottom surface of the water tank cover has a downward concave arc shape and is provided with an orifice which is provided with a filter screen; the water tank cover is located under the water discharge hole; the water tank is provided with the water outlet at a lower end thereof; the water outlet of the water tank is communicated with the water inlet of the water pump via a flexible water pipe.

The beneficial effect of the present application is as follows.

The electric pressure cooker comprises a cooker cover which comprises a plastic-surface cover and a stainless steel cover and a cooker body which comprises an upper gasket base and a plastic outer housing; the electric pressure cooker further comprises a water pump which is provided inside the cooker body and a water tank which is provided at a side surface of the cooker body; the cooker cover is provided with a water spray structure for split-flowing water onto an upper surface of the stainless steel cover; the upper gasket base is provided with a water collect structure for receiving water flowing down from the upper surface of the stainless steel cover; the water collect structure is provided with a water discharge hole at a bottom surface thereof; the water tank is provided with an opening at an upper end thereof; the opening of the water tank is located under the water discharge hole; a water inlet of the water pump is communicated with a water outlet of the water tank, and a water outlet of the water pump is communicated with the water spray structure. With cooperation among the water pump, the water tank, the water spray structure and the water collect structure, the present application realizes to cool down with water circulation, is convenient to operate, saves water resources, has good safety, and has rapid speed to cool down and relieve pressure. It takes time for the present application substantially equivalent to the time used for exhausting and cooling-down for an electric pressure cooker by opening a pressure relief valve, and it is possible to prevent liquid food from falling on the cooker cover. Accordingly, the electric pressure cooker of the present application has a great market value.

### Brief Description of the Drawings

Figure 1 is an exploded schematic view of the present application;

Figure 2 is a schematic view of the present application illustrating structure of a water tank;

Figure 3 is a schematic view of the present application illustrating structure of a plastic-surface cover;

Figure 4 is a schematic view of the present application illustrating structure of a water spray device;

Figure 5 is a schematic view of the present application illustrating structure of an upper gasket base;

Figure 6 is a sectional view of the present application; and

Figure 7 is a partial enlarged view of a portion indicated by A in Figure 6.

### Detailed Description of the Invention

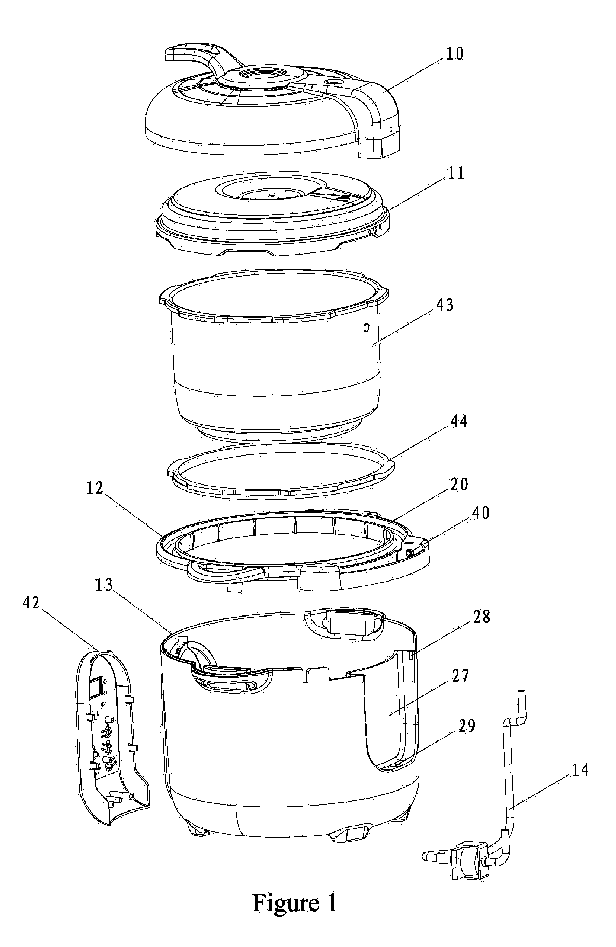

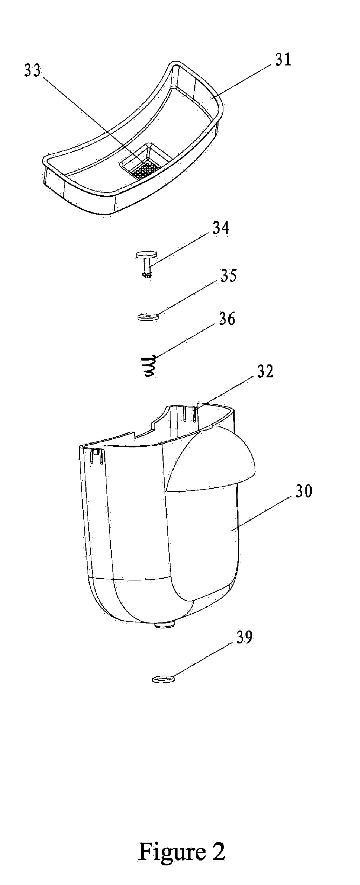

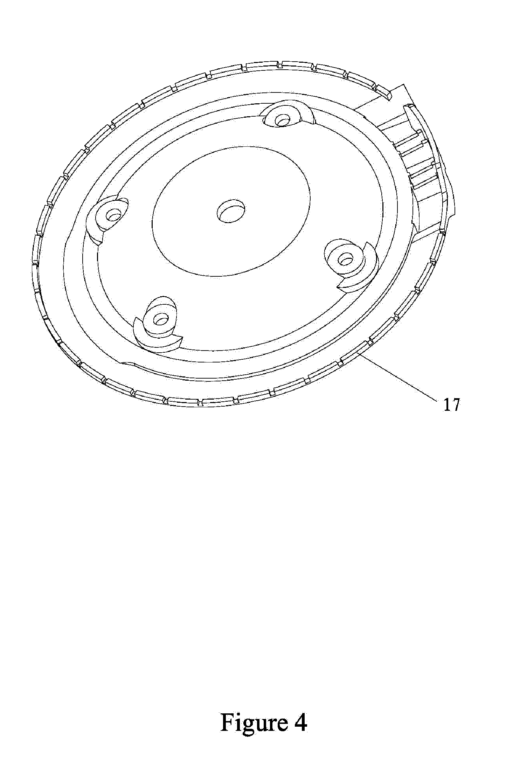

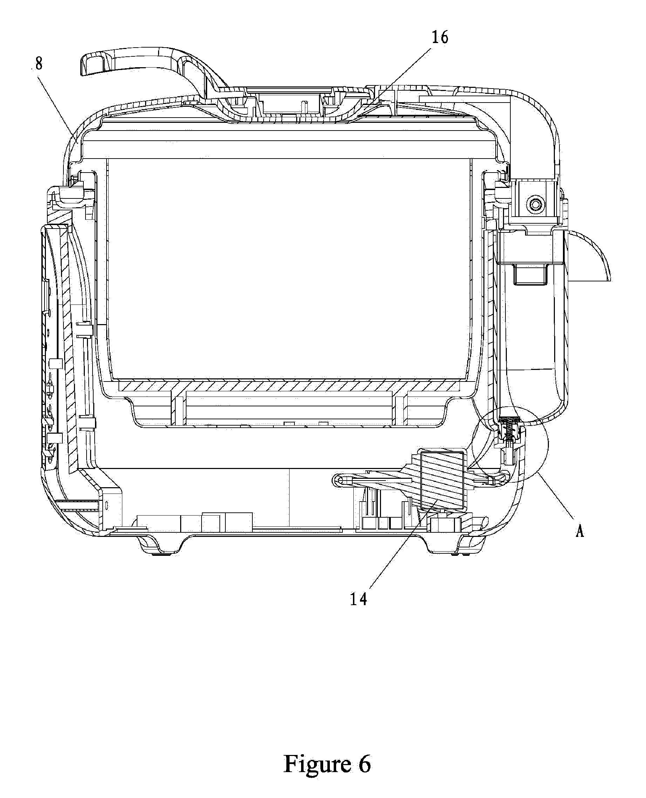

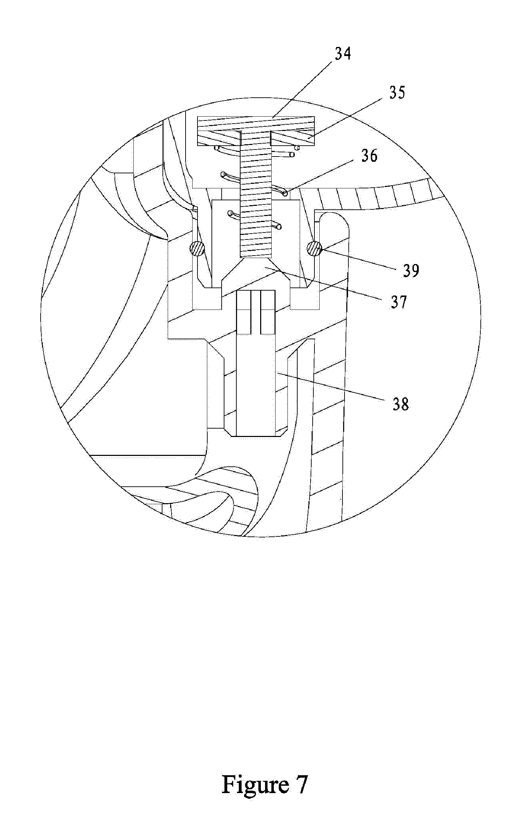

As shown in Figures 1-7, hereinafter, the present application will be described in details in connection with the accompanying drawings.

An electric pressure cooker with a quick pressure relief function comprises a cooker cover which comprises a plastic-surface cover 10 and a stainless steel cover 11 and a cooker body which comprises an upper gasket base 12 and a plastic outer housing 13; the electric pressure cooker further comprises a water pump 14 which is provided inside the cooker body and a water tank which is provided at a side surface of the cooker body; the cooker cover is provided with a water spray structure for split-flowing water onto an upper surface of the stainless steel cover 11; the upper gasket base 12 is provided with a water collect structure for receiving water flowing down from the upper surface of the stainless steel cover 11; the water collect structure is provided with a water discharge hole 15 at a bottom surface thereof; the water tank is provided with an opening at an upper end thereof; the opening of the water tank is located under the water discharge hole 15; a water inlet of the water pump 14 is communicated with a water outlet of the water tank, and a water outlet of the water pump 14 is communicated with the water spray structure. Certainly, the cooker body further comprises an inner shell 43, an inner shell washer 44 attached to the inner shell 43, a heating coil provided under the inner shell 43, and the like, these are commonly used components for an electric pressure cooker, and therefore herein will not be described in details.

During cooling down and pressure relief, water is poured into the water tank in advance, water in the water tank flows into the water inlet of the water pump 14 from the water outlet of the water tank, is pumped into the water spray structure via the water outlet of the water pump 14, split-flows onto the upper surface of the stainless steel cover 11 via the water spray structure, and thus cools down the stainless steel cover 11; water flows down from the upper surface of the stainless steel cover 11, is received by the water collect structure, and then returns to the water tank from the water collect structure via the water discharge hole 15, in this way, water circulation is performed. In the present application, with cooperation among the water pump 14, the water tank, the water spray structure, and the water collect structure, the present application realizes to cool down with the water circulation, is convenient to operate, saves water resources, has good safety, and has rapid speed to cool down and relieve pressure. It takes time for the present application substantially equivalent to the time for exhausting and cooling-down for an electric pressure cooker by opening a pressure relief valve, and it is possible to prevent liquid food from falling on the cooker cover. Accordingly, the electric pressure cooker of the present application has a great market value.

The upper surface of the stainless steel cover 11 may be a cambered surface or a sloped surface wherein a middle portion thereof is high but an edge portion thereof is low, therefore water can flow to a ring-like edge of the stainless steel cover 11 along the cambered surface or the sloped surface. Certainly, the upper surface of the stainless steel cover 11 may further be provided with a water guiding gutter wherein a middle portion thereof is high but an edge portion thereof is low, water can flow to the ring-like edge of the stainless steel cover 11 along the water guiding gutter. When water flows through the upper surface of the stainless steel cover 11, it is possible to perform a process of cooling down.

That the water pump 14 is provided inside the cooker body is for better hiding the water pump 14, so as to make an appearance of the electric pressure cooker better; certainly, the water pump 14 may be provided outside the cooker body, and the object of the present application may be similarly realized. That the water tank is provided at the side surface of the cooker body is for pouring water into the water tank and observing a water level of the water tank conveniently; certainly, the water tank may be provided inside the cooker body, and the object of the present application may be similarly realized.

The water spray structure split-flows water onto the upper surface of the stainless steel cover 11, the water collect structure receives water flowing down from the upper surface of the stainless steel cover 11.The water spray structure and the water collect structure may have many various configurations, two preferred configurations, as examples, are given as follows.

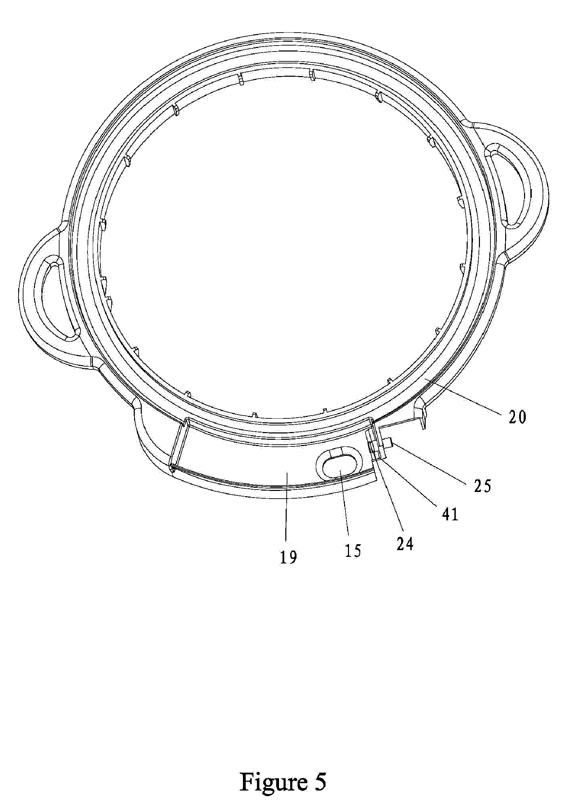

As a preferred embodiment, the water spray structure comprises a water storing cavity 16 and a water spray device 17 provided at a periphery of the water storing cavity 16; the water spray device 17 surrounds the water storing cavity 16; the water storing cavity 16 is surrounded and formed by a middle portion of a lower surface of the plastic-surface cover 10 and a middle portion of the upper surface of the stainless steel cover 11; the water storing cavity 16 is a cavity capable of storing water. The water spray device 17 has evenly distributed gaps, the gaps of the water spray device 17 are communicated with the water storing cavity 16, and water in the water storing cavity 16 may flow outwardly via the gaps of the water spray device 17 and is split-flowed onto the upper surface of the stainless steel cover 11. The water spray device 17 may be a ring-like shape, and may be fixedly connected to the plastic-surface cover 10. Evenly distributed gaps may ensure that water is split-flowed onto the upper surface of the stainless steel cover 11 in individual directions which are centered around a center of the stainless steel cover 11, so as to make water sufficiently contact with the upper surface of the stainless steel cover 11 and thus attain a good effect on cooling down. A seepage gap 18 is formed between an inside lower portion of the plastic-surface cover 10 and an outside lower portion of the stainless steel cover 11, water flowing outwardly from the gaps of the water spray device 17 flows to the ring-like edge of the stainless steel cover 11 via the seepage gap 18. As shown in Figure 5, the water collect structure comprises a water collect trough 19 and a ring-like water discharge trough 20 communicated with the water collect trough 19, the seepage gap 18 is located above the water collect structure, the water discharge hole 15 is provided at a bottom surface of the water collect trough 19. The ring-like water discharge trough 20 is located under the ring-like edge of the stainless steel cover 11, and is configured to correspond to the ring-like edge of the stainless steel cover 11, thereby which can ensure that water split-flowing to the ring-like edge from the middle portion of the upper surface of the stainless steel cover 11 via the seepage gap 18 can be entirely be collected. In this embodiment, water sufficiently flows through the upper surface of the stainless steel cover 11, and finally flows into the water collect structure from the ring-like edge of the stainless steel cover 11, so as to make water sufficiently dissipate heat, thereby reducing time for cooling down.

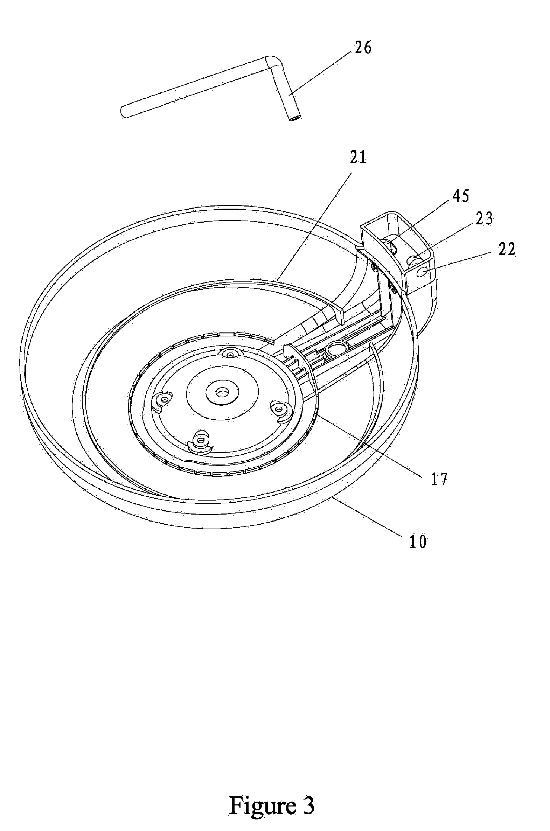

As another preferred embodiment, the water spray structure comprises a water storing cavity 16 and a water spray device 17 arranged at a periphery of the water storing cavity 16. The water spray device 17 surrounds the water storing cavity 16. The water storing cavity 16 is surrounded and formed by a middle portion of the lower surface of the plastic-surface cover 10 and a middle portion of the upper surface of the stainless steel cover 11. The water spray device 17 has evenly distributed gaps, the gaps of the water spray device 17 are communicated with the water storing cavity 16, and water in the water storing cavity 16 may flow outwardly via the gaps of the water spray device 17. The evenly distributed gaps may ensure that water split-flows to the upper surface of the stainless steel cover 11 in individual directions which are centered around a center of the stainless steel cover 11, so as to make water sufficiently contact with the upper surface of the stainless steel cover 11, and thus attain a good effect on cooling down. As shown in Figure 3, the water spray device 17 is provided with a water collect ring 21 at a peripheral thereof, the water collect ring 21 surrounds the water spray device 17, a bottom surface of the water collect ring 21 is in tight contact with the upper surface of the stainless steel cover 11, the water collect ring 21 is provided with an aperture located above the water collect structure. The water collect ring 21 may fixedly be connected to the plastic-surface cover 10. In this embodiment, it is unnecessary that the water collect structure has a ring-like water discharge trough 20, as long as the water collect structure is capable of corresponding to the aperture of the water collect ring 21 and receiving water flowing outwardly from the aperture of the water collect ring 21. Water in the water storing cavity 16 flows outwardly via the gaps of the water spray device 17 and is split-flowed onto the upper surface of the stainless steel cover 11, and then is blocked by the water collect ring 21. Since the bottom surface of the water collect ring 21 is in tight contact with the upper surface of the stainless steel cover 11, that is, there is no gap between the water collect ring 21 and the upper surface of the stainless steel cover 11, water will not sequentially flow to the ring-like edge of the stainless steel cover 11, but to the aperture of the water collect ring 21, and then to the water collect structure via the aperture of the water collect ring 21. In this embodiment, water will not flow to the ring-like edge of the upper surface of the stainless steel cover 11, accordingly, the ring-like edge of the stainless steel cover 11 is dry, and thus it is beneficial to clean the cooker cover.

It should be noted that, the present application may further use other types of the water spray structures except for the two types of the water spray structures as described above, as long as they may split-flow water onto the upper surface of the stainless steel cover 11. For example, a water spray structure comprises a water storing cavity which is a cavity provided inside the plastic-surface cover 10 and a water spray device which are downward slots communicated with the cavity. Water in the cavity may flow downwardly out from the downward slots and split-flow onto the upper surface of the stainless steel cover 11. With this configuration of the water spray structure, the object of the present application may similarly be achieved. The present application may further use other types of the water collect structures except for the two types of the water collect structures as described above, as long as they may receive water flowing down from the upper surface of the stainless steel cover 11. For convenience to scatter water vapor outwardly, the water collect structure may be communicated with outside air; certainly, the cooker cover may be further provided with a water vapor discharge outlet.

The present application may be applicable to a rotating engaging pressure cooker, the cooker cover is engaged with the cooker body by means of rotating; the water outlet of the water pump 14 is communicated with the water spray structure via an adapting device which comprises an adapting hole 22, a water pipe joint C 23, an adapter 24, and a water pipe joint B 25; both the adapting hole 22 and the water pipe joint C 23 are provided to the cooker cover, and the adapting hole 22 is communicated with the water pipe joint C 23; both the adapter 24 and the water pipe joint B 25 are provided to the cooker body, and the adapter 24 is communicated with the water pipe joint B 25; the water outlet of the water pump 14 is communicated with the water pipe joint B 25, the water pipe joint C 23 is communicated with the water storing cavity 16 via a water hose 26; when the cooker cover is rotatedly engaged with the cooker body, the adapter 24 is inserted into the adapting hole 22. When the cooker cover is separated from the cooker body by means of rotating, the adapter 24 is separated from the adapting hole 22, and thus the cooker cover may be taken down conveniently. Specifically, the plastic-surface cover 10 is provided with an evading hole 45, one end of the water hose 26 is communicated with the water pipe joint C 23, the other end of the water hose 26 passes through the evading hole 45 and is communicated with the water storing cavity 16. Water may flow to the water storing cavity 16 from the water outlet of the water pump 14 sequentially via the water pipe joint B 25, the adapter 24, the adapting hole 22, the water pipe joint C 23, and the water hose 26. The adapting device as described above is applicable to the rotating engaging pressure cooker, the adapter 24 and the adapting hole 22 are respectively provided to the cooker body and the cooker cover, so as to conveniently separate the cooker cover from the cooker body. The adapting device has a simple structure and a reliable engagement, and is safe and durable.

Certainly, the adapting device may further be other configurations. For example, a water pipe with an adapter may be used instead of the adapting hole 22, the water pipe joint C 23 and the water hose 26. For another example, the adapting hole 22 and the water pipe joint C 23 are provided to the cooker body, and the adapter 24 and the water pipe joint B 25 are provided to the cooker cover, the object of the present application may similarly be achieved.

As a preferred embodiment, the water tank may be drawn out from the cooker body. The cooker body is provided with a recessed groove 27 at a side surface thereof; the recessed groove 27 is provided with clamping-positioning grooves 28; the water tank comprises a water tank casing 30 and a water tank cover 31; the water tank casing 30 is provided with clamping jaws 32 which are mated with and connected to the clamping-positioning grooves 28. When the water tank casing 30 is disposed in the recessed groove 27, the clamping jaws 32 are clipped into the clamping-positioning grooves 28, thereby fixing the water tank casing 30. The water tank casing 30 is provided with an open port at an upper end thereof, the water tank cover 31 is provided on the open port of the water tank casing 30, a bottom surface of the water tank cover 31 has a downward concave arc structure which may make water flow toward a lowest position at the bottom surface thereof. The bottom surface of the water tank cover 31 is provided with an orifice which is provided with a filter screen 33, the filter screen 33 may filtrate impurities, so as to assure water circulation is performed smoothly. When impurities on the filter screen 33 become more, the water tank cover 31 may be cleaned. The water tank cover 31 is located under the water discharge hole 15, the water tank casing 30 is provided with a water outlet at a lower end thereof, the water outlet of the water tank casing 30 is provided with a water discharge valve for regulating water flow. The water tank may be drawn out from the cooker body, so as to provide convenience for the user.

In this embodiment, the water discharge valve comprises a valve core 34, a sealing ring 35 sheathed on an upper portion of the valve core 34, and a conical spring 36 sheathed on a lower portion of the valve core 34; the valve core 34 is used to block the water outlet of the water tank casing 30 . The recessed groove 27 of the cooker body is provided with a water intake hole 29 at a bottom surface thereof; a pushing post 37 is provided to the water intake hole 29 and corresponds to the water outlet of the water tank casing 30 of the water tank, the water intake hole 29 is communicated with the water inlet of the water pump 14 via a water pipe joint A 38; when the valve core 34 is pushed up by the pushing post 37, a water flowing gap is formed between the valve core 34 and the water tank casing 30 and the water discharge valve is opened. When the water tank is drawn out from the recessed groove 27 to fill with water, the water outlet is blocked by the valve core 34 and the sealing ring 35 under a resilient force of the conical spring 36, and water is not leaked out. However, when the water tank is placed back to the recessed groove 27, the pushing post 37 is aligned with the water outlet of the water tank casing 30, and then the valve core 34 is pushed up by the pushing post 37, so as to make water flow into the water inlet of the water pump 14 through the water discharge valve. The water discharge valve for regulating water flow may have a variety of configurations, and one of them is only listed above.

The water outlet of the water tank casing 30 is provided with an O-shaped sealing ring A 39, the adapter 24 is provided with an O-shaped sealing ring B 40. The O-shaped sealing ring A 39 may well seal a connection gap between the water outlet of the water tank casing 30 and the water intake hole 29, so as to prevent water from leaking, thereby achieving the object of sealing. The O-shaped sealing ring B 40 may well seal a connection gap between the adapter 24 and the adapting hole 22, so as to prevent water from leaking, thereby achieving the object of sealing.

As another preferred embodiment, the water tank can not be drawn out from the cooker body. A side surface of the cooker body is fixedly provided with the water tank which is provided with an opening at an upper end thereof; a water tank cover 31 is provided on the opening of the water tank; a bottom surface of the water tank cover has a downward concave arc shape and is provided with an orifice which is provided with a filter screen 33; the water tank cover 31 is located under the water discharge hole 15; the water tank is provided with a water outlet at a lower end thereof; the water outlet of the water tank is communicated with the water inlet of the water pump 14 via a flexible water pipe. In this embodiment, because the water tank and the plastic outer housing 13 may be integrally formed, the water tank can not be drawn out. Only the water tank cover 31 is opened, water can be filled into the water tank. Manufacturing cost for the product according to this embodiment may be reduced.

Both the adapter 24 and the water pipe joint B 25 are provided to the upper gasket base 12. Certainly, the adapter 24 and the water pipe joint B 25 may be also provided to other portions. The upper gasket base 12 is provided with a side step 41 for aligning with a handle of the cooker cover. The side step 41 is low at an outer side thereof but high at an inner side thereof. When the cooker cover is rotatedly engaged with the cooker body, the handle enters into the inner side of the side step 41 so to realize alignment, and at this time, the adapter 24 inserts into the adapting hole 22. In this embodiment, a height dimension of the side step 41 is 0.5~2cm.

The electric pressure cooker further comprises a control panel 42 provided at a front surface of the cooker body; the control panel 42 is provided with a control circuit therein; the control circuit is electrically connected to the water pump 14; the control panel 42 is provided with a cooling key for controlling the water pump 14. The control panel 42 is an operation interface for a user, by which the user may transmit an instruction to the control circuit. Controlling progress for the water pump 14 will be described as example as follows: program of a working time for the water pump 14 is stored in the control circuit in advance, for instance, the working time is 4 minutes; when a user presses down the cooling key, the control circuit turns on a power supply of the water pump 14, so that the water pump 14 starts work; when the working time is up to 4 minutes, the control circuit automatically turns off the power supply of the water pump 14, so that the water pump 14 stops work; in such the 4 minutes, if the user determines that the cooker cover may be opened, that is, a float valve has already fallen down, and hopes the water pump 14 to stop work, the user may press down the cooling key again, and the control circuit turns off the power supply of the water pump 14 in time. Certainly, the control circuit may further electrically connected to a heating disc of the electric pressure cooker, so as to control an operating mode of the heating disc.

The present application may further be applicable to a pressure cooker with a pressing cover, the cooker cover is hinged to the cooker body, and the water outlet of the water pump 14 is communicated with the water spray structure via the water hose 26. Certainly, the present application may further be applicable to a pressure cooker with a falling cover, a clamp-type pressure cooker, etc.

After food has been cooked by the electric pressure cooker of the present application, the water tank is filled with appropriate amount of water. When the user starts the cooling key on the control panel 42, the water pump 14 starts work and deliveries water in the water tank to the water storing cavity 16, water flows outwardly out from the gaps of the water spray device 17 and then flows onto the upper surface of the stainless steel cover 11. Water flows to the ring-like edge of the stainless steel cover 11 via the seepage gap 18, and then flows to the water collect structure (or another technical solution, that is, water is blocked by the water collect ring 21 and flows to the water collect structure via the aperture of the water collect ring 21). Water in the water collect structure returns to the water tank via the water discharge hole 15. In this way, during the water circulation, heat in the electric pressure cooker is continually absorbed and taken away by water, thereby making a pressure in the electric pressure cooker rapidly decline to an atmospheric pressure. The user may safely open the cooker cover, and then may enjoy delicious food.

The above contents are only preferred embodiments of the present application. According to conception of the present application, those skilled in the art will devise various modifications in the preferred embodiments and applicable fields, therefore, the contents of the description should not be understood as a limit for the present application.

### Industrial Applicability

The electric pressure cooker of the present application is provided with a water pump which is provided inside the cooker body and a water tank which is provided at a side surface of the cooker body; the cooker cover is provided with a water spray structure for split-flowing water onto an upper surface of the stainless steel cover; an upper gasket base is provided with a water collect structure for receiving water flowing down from the upper surface of the stainless steel cover; the water collect structure is provided with a water discharge hole at a bottom surface thereof; the water tank is provided with an opening at an upper end thereof; the opening of the water tank is located under the water discharge hole; a water inlet of the water pump is communicated with a water outlet of the water tank, and a water outlet of the water pump is communicated with the water spray structure. With cooperation among the water pump, the water tank, the water spray structure, and the water collect structure, the present application realizes to cool down with water circulation, is convenient to operate, saves water resources, has good safety, and has a rapid speed to cool down and relieve pressure. It takes time for the present application substantially equivalent to the time used for exhausting vapor and cooling down for an electric pressure cooker by opening a pressure relief valve, and it is possible to prevent liquid food from falling on the cooker cover. Accordingly, the electric pressure cooker of the present application may be manufactured on a large scale and has a great market value.

## Claims

1. An electric pressure cooker with a quick pressure relief function, comprising:
a cooker cover which comprises a plastic-surface cover and a stainless steel cover; and
a cooker body which comprises an upper gasket base and a plastic outer housing;
**characterized in that**:
the electric pressure cooker further comprises a water pump which is provided inside the cooker body and a water tank which is provided at a side surface of the cooker body;
the cooker cover is provided with a water spray structure for split-flowing water onto an upper surface of the stainless steel cover;
the upper gasket base is provided with a water collect structure for receiving water flowing down from the upper surface of the stainless steel cover, and the water collect structure is provided with a water discharge hole at a bottom surface thereof;
the water tank is provided with an opening at an upper end thereof, and the opening of the water tank is located under the water discharge hole;
a water inlet of the water pump is communicated with a water outlet of the water tank, and a water outlet of the water pump is communicated with the water spray structure.

2. The electric pressure cooker with the quick pressure relief function according to Claim 1, **characterized in that**:
the water spray structure comprises a water storing cavity and a water spray device arranged at a periphery of the water storing cavity;
the water spray device surrounds the water storing cavity;
the water storing cavity is surrounded and formed by a middle portion of a lower surface of the plastic-surface cover and a middle portion of the upper surface of the stainless steel cover;
the water spray device has evenly distributed gaps, and the gaps of the water spray device are communicated with the water storing cavity;
a seepage gap is formed between an inside lower portion of the plastic-surface cover and an outside lower portion of the stainless steel cover;
the water collect structure comprises a water collect trough and a ring-like water discharge trough communicated with the water collect trough;
the seepage gap is located above the water collect structure;
the water discharge hole is provided at a bottom surface of the water collect trough.

3. The electric pressure cooker with the quick pressure relief function according to Claim 1, **characterized in that**:
the water spray structure comprises a water storing cavity and a water spray device arranged at a periphery of the water storing cavity;
the water spray device surrounds the water storing cavity;
the water storing cavity is surrounded and formed by a middle portion of a lower surface of the plastic-surface cover and a middle portion of the upper surface of the stainless steel cover;
the water spray device has evenly distributed gaps, and the gaps of the water spray device are communicated with the water storing cavity;
the water spray device is provided with a water collect ring which surrounds the water spray device at a periphery thereof, a bottom surface of the water collect ring is in tight contact with the upper surface of the stainless steel cover, the water collect ring is provided with an aperture located above the water collect structure.

4. The electric pressure cooker with the quick pressure relief function according to Claim 2 or 3, **characterized in that**:
the cooker cover is engaged with the cooker body by means of rotating;
the water outlet of the water pump is communicated with the water spray structure via an adapting device which comprises an adapting hole, a water pipe joint C, an adapter and a water pipe joint B;
both the adapting hole and the water pipe joint C are provided to the cooker cover, and the adapting hole is communicated with the water pipe joint C;
both the adapter and the water pipe joint B are provided to the cooker body, and the adapter is communicated with the water pipe joint B;
the water outlet of the water pump is communicated with the water pipe joint B, the water pipe joint C is communicated with the water storing cavity via a water hose;
when the cooker cover is rotatedly engaged with the cooker body, the adapter is inserted into the adapting hole.

5. The electric pressure cooker with the quick pressure relief function according to Claim 4, **characterized in that**:
the cooker body is provided with a recessed groove at the side surface thereof;
the recessed groove is provided with clamping-positioning grooves;
the water tank comprises a water tank casing and a water tank cover;
the water tank casing is provided with clamping jaws which are mated with and connected to the clamping-positioning grooves and is provided with an open port at an upper end thereof;
the water tank cover is provided on the open port of the water tank casing, a bottom surface of the water tank cover has a downward concave arc structure and is provided with an orifice which is provided with a filter screen, the water tank cover is located under the water discharge hole;
the water tank casing is provided with a water outlet at a lower end thereof;
the water outlet of the water tank casing is provided with a water discharge valve.

6. The electric pressure cooker with the quick pressure relief function according to Claim 5, **characterized in that**:
the water discharge valve comprises a valve core, a sealing ring sheathed on an upper portion of the valve core, and a conical spring sheathed on a lower portion of the valve core;
the valve core is used to block the water outlet of the water tank casing;
the recessed groove of the cooker body is provided with a water intake hole at a bottom surface thereof;
a pushing post is provided to the water intake hole and corresponds to the water outlet of the water tank casing, and the water intake hole is communicated with the water inlet of the water pump via a water pipe joint A;
when the valve core is pushed up by the pushing post, the water discharge valve is opened.

7. The electric pressure cooker with the quick pressure relief function according to Claim 6, **characterized in that**:
the water outlet of the water tank casing is provided with an O-shaped sealing ring A, and the adapter is provided with an O-shaped sealing ring B;
both the adapter and the water pipe joint B are provided to the upper gasket base;
the upper gasket base is provided with a side step for aligning with a handle of the cooker cover.

8. The electric pressure cooker with the quick pressure relief function according to Claim 1, **characterized in that**:
the electric pressure cooker further comprises a control panel provided at a front surface of the cooker body;
the control panel is provided with a control circuit therein;
the control circuit is electrically connected to the water pump.

9. The electric pressure cooker with the quick pressure relief function according to Claim 2 or 3, **characterized in that**:
the cooker cover is hinged to the cooker body;
the water outlet of the water pump is communicated with the water spray structure via a flexible water tube.

10. The electric pressure cooker with the quick pressure relief function according to Claim 4, **characterized in that**:
the side surface of the cooker body is fixedly provided with the water tank;
the water tank is provided with the opening at the upper end thereof, a water tank cover is provided on the opening of the water tank;
a bottom surface of the water tank cover has a downward concave arc shape and is provided with an orifice which is provided with a filter screen;
the water tank cover is located under the water discharge hole;
the water tank is provided with the water outlet at a lower end thereof;
the water outlet of the water tank is communicated with the water inlet of the water pump via a flexible water pipe.
